(19) **Europäisches Patentamt / European Patent Office / Office européen des brevets**

(11) **EP 1 170 677 B1**

(12) **EUROPEAN PATENT SPECIFICATION**

(45) Date of publication and mention
of the grant of the patent:
**18.03.2009 Bulletin 2009/12**

(51) Int Cl.:
***G06F 17/30*** *(2006.01)*

(21) Application number: **01112540.8**

(22) Date of filing: **23.05.2001**

(54) **Method and system of weighted context feedback for result improvement in information retrieval**

Methode und System einer gewichteten Kontextrückmeldung zur Verbesserung von Ergebnissen in der Informationswiederauffindung

Procédé et système pour retourner des informations pondérées d'un contexte pour améliorer les résultats d'une recherche d'informations

(84) Designated Contracting States:
**AT BE CH CY DE DK ES FI FR GB GR IE IT LI LU MC NL PT SE TR**

(30) Priority: **04.07.2000 EP 00114341**

(43) Date of publication of application:
**09.01.2002 Bulletin 2002/02**

(73) Proprietor: **International Business Machines Corporation**
**Armonk, NY 10504 (US)**

(72) Inventor: **Geiselhart, Reinhold**
**72108 Rotenburg-Ergenzingen (DE)**

(74) Representative: **Döhler, Denis**
**IBM Deutschland Management**
**& Business Support GmbH**
**Intellectual Property Department**
**Pascalstraße 100**
**70569 Stuttgart (DE)**

(56) References cited:
• **FAGIN R, MAAREK Y S: "Allowing users to weight search terms" PROCEEDINGS OF RIAO 2000 (RECHERCHE D'INFORMATION PAR ORDINATEUR), [Online] 12 April 2000 (2000-04-12), XP001176853 Paris, France Retrieved from the Internet: <URL:http://www.almaden.ibm.com/cs/people/ fagin/riao00.pdf> [retrieved on 2003-12-04]**

• **SALTON G ET AL: "IMPROVING RETRIEVAL PERFORMANCE BY RELEVANCE FEEDBACK", JOURNAL OF THE AMERICAN SOCIETY FOR INFORMATION SCIENCE, AMERICAN SOCIETY FOR INFORMATION. WASHINGTON, US, VOL. 41, NR. 4, PAGE(S) 288-297 XP001028431 ISSN: 0002-8231 * Introduction to Relevance feedback ***

• **COOPER AND BYRD: "Lexical navigation: visually prompted query expansion" PROCEEDINGS OF THE SECOND ACM INTERNATIONAL CONFERENCE ON DIGITAL LIBRARIES, [Online] 1997, pages 237-246, XP002265696 Philadelphia, Pennsylvania, United States ISBN: 0-89791-1 Retrieved from the Internet: <URL:http://delivery.acm.org/ 10.1145/27000 0/263828/p237-cooper.pdf? key1=263828&key2= 2342421701&coll=ACM&dl=ACM&CFID=148766 47&C FTOKEN=50131930> [retrieved on 2003-12-04]***

• **MAAREK Y S ET AL: "FULL TEXT INDEXING BASED ON LEXICAL RELATIONS AN APPLICATION: SOFTWARE LIBRARIES", PROCEEDINGS OF THE INTERNATIONAL CONFERENCE ON RESEARCH AND DEVELOPMENT IN INFORMATION RETRIEVAL. (SIGIR). CAMBRIDGE, MA., JUNE 25 - 28, 1989, READING, ACM, US, VOL. CONF. 12, PAGE(S) 198-206 XP000239149 * page 199 - page 204 ***

• **FAGIN R ET AL: "INCORPORATING USER PREFERENCES IN MULTIMEDIA QUERIES", DATABASE THEORY - ICDT. INTERNATIONAL CONFERENCE. PROCEEDINGS, PROCEEDINGS ON DATABASE THEORY, XX, XX, VOL. 1186, PAGE(S) 247-261 XP008024963 * the whole document ***

- FAGIN R ET AL: "A formula for incorporating weights into scoring rules" , DATABASE THEORY - ICDT '97. 6TH INTERNATIONAL CONFERENCE, DELPHI, GREECE, 8-10 JAN. 1997 , THEORETICAL COMPUTER SCIENCE, 28 MAY 2000, ELSEVIER, NETHERLANDS, PAGE(S) 309 - 338 XP002265697 ISSN: 0304-3975 * the whole document *
- "METHOD FOR INFERRING LEXICAL ASSOCIATIONS FROM TEXTUAL CO-OCCURRENCES" , IBM TECHNICAL DISCLOSURE BULLETIN, IBM CORP. NEW YORK, US, VOL. 33, NR. 1B, PAGE(S) 54-55 XP000122806 ISSN: 0018-8689 * the whole document *

Remarks:
    The file contains technical information submitted after the application was filed and not included in this specification

**Description**

BACKGROUND OF THE INVENTION

The present invention relates to the field of document based information retrieval in the intranet and the Internet domain, and in particular to a method for re-ranking an existing result list of documents.

Nowadays digital information systems provide easy access to large amounts of information. For example, users can access great quantities of information in databases on a network or even in personal computers. Mere access to large amounts of information has only limited value, however, without knowing what is useful about the information.

Searching for a certain information in a huge amount of almost unstructured information can be a very cumbersome task. As well as the probability is relatively high that the desired information is somewhere existent in an existing collection of information and potentially can be found, it is at the same time covered up with all that additional unwanted information.

To retrieve a desired piece of information there have been proposed several methods. A first approach is to structure raw data before a search is started. Structuring the raw data in advance can be done by introducing a set of taxonomies (like "cars", "health", "computers" etc.) and assigning each retrieved document into one or more of those categories what can be performed in advance, e.g. by an administrator.

It is noteworthy that the term "document" is understood in the present context in the broadest sense i.e. including any continuous amount of information.

Before a search is started, the user has to preselect one or more categories and thereby reduces the possible amount of returned information, because only the information stored in the selected categories is returned. A simple way to accomplish this is for example having several different indexes for the search engine. The user can then select either one or more indexes as a basis for the search.

The drawback of the above described approach is that extra effort is necessary for preparing the raw data by defining the taxonomy set and by assigning each document into one or more categories (or indexes). Since the information most often is of a dynamic nature, an update of new information or categories (or both) has to be done on a regular basis. Further there is a certain chance that some information is lost because of a wrong assignment to categories or a missing selection by the user.

A second approach is to structure a search result after having finished the search. Structuring the result of a search is either based on the input the user made when he started the search with some query terms, or an attempt is made to dynamically find similiarities inside of the documents and group (cluster) them together.

The second approach can be implemented by way of clustering the results which means finding "categories" dynamically by looking for similiarities inside of the returned documents. This can be achieved according to several different criteria, for example by scanning for lexical affinities (anyhow related expressions) and bundling those documents that have a certain similiarity. Thereby the total list of returned documents is split into several non-overlapping clusters that contain documents which are assumed to deal with the same or similiar context.

The drawback of the above second approach is that the search engine has no idea which context the user is really looking for. Moreover, the clustering of the documents is performed on the basis of word tuples that occur with a certain relation to each other in the documents. Ambiguous terms can cause some documents to be scattered all over the clusters, although from the user point of view they deal with the same context. To find those documents the user has to open and read lots of uninteresting information.

An alternative way to implement the second approach, i.e. structurung the search result after having finished the search, is to sort the found documents in a descending order, derived by some comparable criterion. This method is commonly known as "Ranking". The appearance of the search terms in each of the documents is a measurement for the importance of the individual document. All values are normalized so the higher the rank value is, the more importance is assumed.

Various different algorithms are used to determine the individual rank value, most often the document sizes, the index sizes, the total number of returned information or other criteria are considered.

Still another way to implement the second approach is refining the search by adding more precise search terms known as "Narrow Query". The user starts the search process with an initial query and examines some of the returned documents. For each document he assigns a relevance value that reflects if the appropriate document is of high or low value. The search engine scans the marked documents for terms that occur with a high frequency and uses those terms to synthesize a new query. This new query favors the high frequent terms of the documents with a high relevance and excludes the terms of the documents with a low relevance.

But its drawback is that for good results the user has to examine and mark a lot of documents, otherwise the refined query is more or less random.

The predescribed approaches have common the drawback that only the entered search terms can be taken into account. Since search terms often are ambiguous, they can occur in various totally different context and cause a lot of unwanted information to be returned. If, in addition, there are only a few terms entered, there is a high probability that lots of documents get the same high rank value.

Further, in an article by R. Fagin and E. L. Wimmers entitled "Incorporating user preferences in multimedia queries", and published in Proc. 1997 International Conference on Database Theory, pp. 247-261, according to a third approach, it is proposed to weight the search terms in information retrieval with the help of user feedback and to allow to apply weights to any sort of rules. In particular, a formula is described to re-sort and re-rank the result list of a query according to the weighting of the original search terms by the user.

The drawback of the above third approach is that from common experiences in information retrieval it is known that the typical query consists of very few search terms ( < 2 terms). In the wast majority of all searches trying to apply any weighting to them would have very little impact. The main reason for the fact that the average search is made with only one or two terms is the lacking of conception of the user what additional context information he had to enter to improve the query and filter the unwanted documents. Following this scenario the user would have to read some of the returned documents first to obtain some context information which he in turn could then use to create additional query terms. Only with a minimum set of query terms that reflect the desired context this method would make sense.

In an article by R. Fagin and Y. S. Maarek entitled "Allowing users to weight search terms" and published in Proc. of RIAO 2000, pp. 682-700, a method of retrieving and ranking a list of text documents out of a set of text documents is presented, Finally, all of the above cited prior art approaches have common the drawback that, if the preparation of the raw data as described above is not feasible or in a situation, where information can be lost because of a user error, e.g. by selecting a wrong index, only a method that does a post search improvement is acceptable.

Thereupon, all of the described approaches require a relative high effort with opening and reading the contents of documents, thereby wasting time with useless information.

SUMMARY OF THE INVENTION

The object of the present invention therefore is to provide an information retrieval method and system which presents only the desired information without wasting a user's time with opening and reading documents of no value.

Another object is to provide a method and a system for ranking information comprised of a list of documents which presents the desired information on top of a ranking hierarchy.

Still another object is to minimize the possibility of user errors, in particular with respect to generating search queries.

These problems are solved by the features of the independent claims. Advantageous embodiments of the invention are subject matter of the dependent claims.

The invention accomplishes the foregoing by gathering context information from the documents, generating at least one rank criterion from the context information and re-ranking the documents, based on the at least one rank criterion.

The concept underlying the invention is a post search improvement, particularly a human feedback to improve search results. It is emphasized hereby that the proposed re-ranking is only based on the results of a first search procedure.

The criterion for re-ranking hereby consists of terms themselves found in the documents. These terms contain information which allow to feedback to the context of the underlying documents. These terms, in the following designated as "context terms", are used in a weighting formula in order to separate documents with a matching context from documents with a dismatching context.

The ambiguity of search terms which causes unwanted information to be returned, in a preferred embodiment, is solved by means of context information which is used to filter documents with unwanted context. In another embodiment a context weighting can be performed on a client data processing system, whereby no iterative and time consuming access to a search engine is necessary.

Using lexical affinities to be evaluated as a criterion for re-ranking, is only exemplarily and can be accomplished also by other means that are able to provide a notion of context. A suitable approach could be to use 'features' that have been extracted from the documents or to simply create 'statistics of words'. 'Features' are names of people, places, companies etc. and can be presented as a context indication very similar to lexical affinities. Especially when several extracted features are grouped and weighted together, the context definition would be very precise. 'Word statistics' describe the frequency a given word is occuring with in a given document.

In case one finds several different words in a document at least a minimum amount of times - no matter if they occur with a certain proximity to each other like with lexical affinities - and the same is true for another document, it is assumed that both documents are very close to each other concerning their context.

Both information (features as well as word statistics) can also be created by the search engine and transferred to the client together with the result list.

Advantageously, the number of unnecessarily opened documents is hereby essentially reduced since an appropriate weighting of the context terms allows to precise the right context for the desired information.

BRIEF DESCRIPTION OF THE DRAWINGS

The invention will be understood more readily from the following detailed description when taken in conjunction with the accompanying drawings, in which

Fig. 1     is a combined block and flow diagram depicting a Search process with weighted context feedback by Lexical affinities, in accordance with the invention;

Fig. 2     is a screenshot of a possible implementation of this method; and

Fig. 3     is a flow diagram depicting an embodiment of the re-ranking mechanism proposed by the invention.

DETAILED DESCRIPTION OF THE DRAWINGS

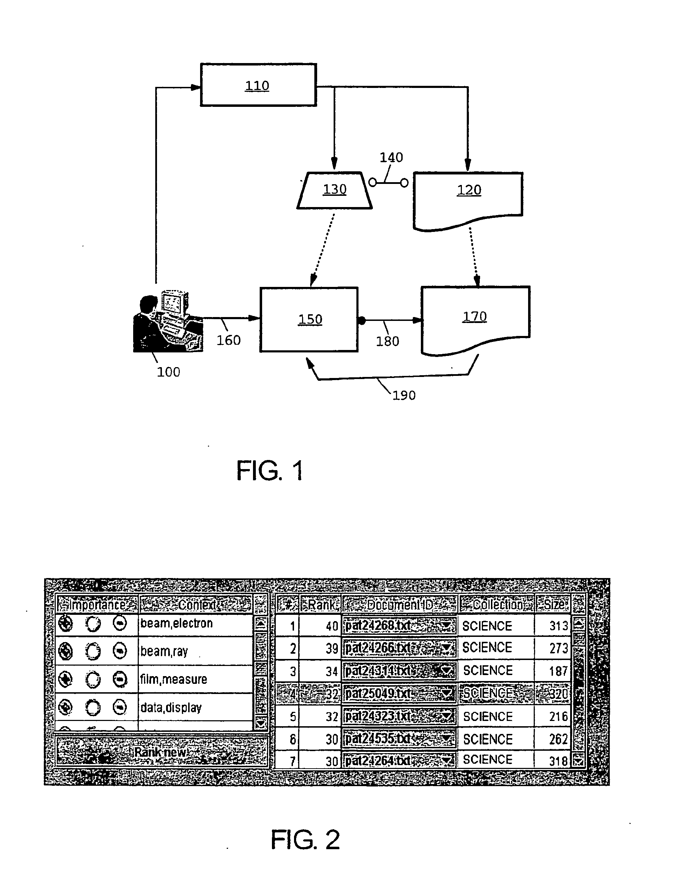

Referring to Fig. 1, a combined block and flow diagram is depicted which shows a typical search with weighted context feedback by lexical affinities. The scenario described in the following assumes that it is accepted to start a search with rather unprecise search terms and to try to structure the huge amount of returned data according to context information.

A user 100 starts a search by entering search term(s). The search term(s) is (are) transferred to a search engine 110 which generates a result list 120 ranked by the search term(s). The search engine 110, in parallel, automatically retrieves context information 130 from returned result list 120 which is related 140 to the original list of documents. The context information, in a preferred embodiment, is based on lexical affinities which will be discussed in more detail later.

The search engine 110 presents 150 the context information 130 to the user 100 and asks for a feedback. The user 100 performs a weighting 160 of the presented context information 130 in a range from 'important' to 'non-important'.

The result list 120 is then re-ranked 170 with the user-weighted context information 180 to increase the "rank distance" of important and non important documents. The re-ranking is performed by utilizing a context ranking formula which is described in more detail below. The documents that are now on top of the list (highest context-weighted ranking value) represent the desired information.

Optionally, the re-ranking can be performed iteratively whereby the modified list of documents ranked by the user-weighted context information 180 is created new 190 with different weightings, based on the original list, and re-ranked again performing the predescribed steps.

The underlying re-ranking algorithm is based on an adaptation of the prementioned Fagin's and Wimmers' formula. The way to generate context information is the extraction of "lexical affinities". This method produces pairs of terms that are found in a certain relation within the documents. If one, for example, is searching for the term "display", that term could occur together with the terms "window" or "show" or "computer" or various other combinations. Each combination is an indication for the context the documents are dealing with.

In the formula of R. Fagin and E. L. Wimmers, the following definitions are assumed in the following.

Let x1,...,xm be the terms that represent the context information. The function f(x1,...,xm) is then the ranking function that returns a rank value for a given document with respect to these terms x1,...,xm. $\theta=(\theta 1,...,\theta m)$ is the overall weighting for all of the m terms and $\theta i$ is the individual weight for term xi. Under the assumption that $\theta 1,...,\theta m$ are all non-negative, $\theta 1>=...>=\theta m$ and they all sum to one, where we use the weighted ranking formula according to Fagin and Wimmers which is:

$$(\theta 1 - \theta 2)\,f(x1) + 2(\theta 2 - \theta 3)\,f(x1,x2)$$

$$+3(\theta 3 - \theta 4)\,f(x1,x2,x3)+...+m\;\theta m\;f(x1,...,xm) \qquad (1)$$

A scenario where all m context terms get a different rating would increase the necessary calculating effort to the theoretical maximum of m. According to equation (1) we had to calculate the ranking value for each document m times, i.e.

$$f(x1),f(x1,x2),f(x1,x2,x3),...,f(x1,...,xm),$$

since the expressions ($\theta$n - $\theta$n+1) in equation (1) would all become non-equal to zero. Besides the enormous visualization effort to allow a user to choose m different ratings for all the m context terms, it seems very unlikely that anybody would really do this. An approach where for example three different rating levels are selectable is much more practical.

Let the rating levels be 'high', 'medium' and 'low' and the relation between those three rating levels

$$\theta a \ = \ 2 \ \theta b \ \ and \ \ \theta c \ = \ 0.5 \ \theta b \qquad\qquad (2)$$

During further evaluation with more samples of test documents it might turn out, that a stronger spreading of those three levels is more useful, such as $\theta a = 4\theta b$ and $\theta c = 0.25 \ \theta b$ or even more.

Now the rating selections of all of the context terms made by the user can be divided into

$$a \ terms \ rated \ with \ `high`$$

$$b \ terms \ rated \ with \ `medium`$$

$$c \ terms \ rated \ with \ `low` \qquad\qquad (3)$$

where all selections sum up to the total number of context terms

$$a \ + \ b \ + \ c \ = \ m \qquad\qquad (4)$$

Because of the assumption that all $\theta 1,...,\theta m$ are non- negative and sum to one, it can be written

$$a \ \theta a \ + \ b \ \theta b \ + \ c \ \theta c \ = \ 1$$

and

$$\theta b \ = \ (1 \ - \ a \ \theta a \ - \ c \ \theta c) \ / \ b.$$

Because of (2) it follows

$$\theta b \ = \ (1 \ - \ 2a \ \theta b \ - \ 0.5c \ \theta b) \ / \ b$$

and finally

$$\theta b = 1 / (2a + b + 0.5c) \qquad (5)$$

Allowing only three discrete ranking levels, one gets only three groups of $\theta n$ sorted according to their importance to the user. The first 'a' context terms are rated high, the next 'b' context terms are rated medium and the last 'c' context terms are rated low.

$$\theta 1 = \ldots = \theta a \text{ and}$$

$$\theta a+1 = \ldots = \theta a+b \text{ and}$$

$$\theta a+b+1 = \ldots = \theta m \qquad (6)$$

Using equation (6), equation (1) can be simplified into

$$a(\theta a - \theta a+1) \ f(x1,x2, \ldots,xa)$$

$$+ (a+b)(\theta a+b - \theta a+b+1) \ f(x1,x2,\ldots,xa+b)$$

$$+ (a+b+c) \ \theta c \ f(x1,x2,\ldots,xa+b+c) \qquad (7).$$

In case of the only three relevance values 'a', 'b', and 'c', $\theta a+1 = \theta b$, $\theta a+b = \theta b$ and $\theta a+b+1 = \theta c$, one can substitute

$$a(\theta a - \theta b) \ f(x1,x2, \ldots,xa)$$

$$+ (a+b)(\theta b - \theta c) \ f(x1,x2,\ldots,xa+b)$$

$$+ (a+b+c) \ \theta c \ f(x1,x2,\ldots,xa+b+c) \qquad (8).$$

This has to be converted into a normalized form with only dependencies to the number of context terms rated with the three discrete rating levels and the rank functions of the appropriate context terms.
Following equation (2) one can substitute equation (8) with

$$a \ \theta b \ f(x1,\ldots,xa)$$

$$+ 0.5(a+b) \ \theta b \ f(x1,\ldots,xa+b)$$

$$+ 0.5(a+b+c) \ \theta b \ f(x1,\ldots,xa+b+c) \qquad (9)$$

and according to equation (5) one finally obtains

$$[2a\ f(x1,...,xa)$$
$$+\ (a+b)\ f(x1,...,xa+b)$$
$$+\ (a+b+c)\ f(x1,...,xa+b+c)]/(4a+2b+c) \qquad (10)$$

Equation (10) calculates the relevance of a document with respect to the context terms x1,...,xm when a, b and c are the number of terms that have been assigned a high (a), medium (b) and low (c) relevance and f(x1,...,xa), f(x1,..., xa+b) and f(x1,...,xa+b+c) are the partial relevance functions of this document with respect to a subset of context terms.

In comparison to equation (1), one now has to call the ranking function only three times with different parameter lists which saves a considerable amount of processing effort. The additional factors in equation (10) are necessary to fulfill the three desiderata of equation (1). For the further details concerning these factors it is referred to the prementioned article by Fagin and Wimmer.

A first way is to feed back the weighting information to the Text Search Engine and calculate the new rank value for all documents of the result list. This reveales some major problems as it is currently not possible to call a ranking function with new parameters (the context terms) on the basis of a prior search, because the statistics of these new parameters are not available. Only the original search terms, that are known during the search process, are complemented by the statistics information of the search indexes and could then be used for a ranking.

Besides this problem, it would also require some additional communication with the search engine that increases the response time to the user.

Therefore it is proposed a new and very efficient ranking algorithm to be used solely on the client side without any further access to the Text Search Engine. The processing effort is relatively low, so that it can also be used on socalled "thin clients" and a quick response to the user is guaranteed.

The new ranking algorithm is based on the "absolute" ranking of the prior search that was derived from the query terms only. Depending on the occurrence of the context terms in a given document and their importance for the user a new rank value is calculated:

Let Rd be the "absolute" rank value of a given document 'd' that resulted from the search, Td = (x1,...,xn) is the tupel of context terms that are contained in document 'd', then is

$$fd(x1,...,xn)\ =\ Rd\ \ if\ x1,...,xn\ element\ of\ Td$$

$$and$$

$$fd(x1,...,xn)\ =\ 0\ if\ x1,...,xn\ non-element\ of\ Td\ \ (11)$$

This new ranking equation (11) is used together with the adaptation of Fagin's and Wimmer's weighted ranking (10) and results in a new rank value for each document. The desired effect is a change in the result list order. Those documents that contain the preferred context terms will appear on top of the list since their new rank value is higher than before. The documents that contain only the context terms that got a low relevance from the user will be pushed to the end of the list since their rank value is lowered.

The above described (re-)ranking algorithm can be implemented in a Java environment with the help of Visual Builders. For the special purpose of weighted context feedback a new Java Bean was developed and seemlessly integrated into the Java Beans component model architecture.

Fig. 2 depicts a screenshot of a possible implementation of this method. The right side of this screenshot shows the result of a search in a table format. According to the ranking of the result list by the query term (in this case it was the single word "display"), the documents are sorted top-down.

On the left side there is the visualization of the Context Feedback. The left column with the header title "Importance" holds three graphical buttons on each line, the right column with the header title "Context" holds the pairs of lexical affinities on each line. The table is scrollable up and downward to display all the context information and the corresponding weighting.

Immediately after having performed a search, the right column is filled with all context information that could be extracted from all documents of the result list, the weighting of the individual context information in the left column is all set to medium.

By clicking the plus or minus symbols the weighting for each pair of lexical affinities can be modified. Leaving some entries in the "medium" state is also possible. As soon as the user is done with the weighting, he presses the "Rank new" button and the information is sent to the search client to do a weighted re-rank. This causes the right result list table to refresh its contents with the new ranking order.

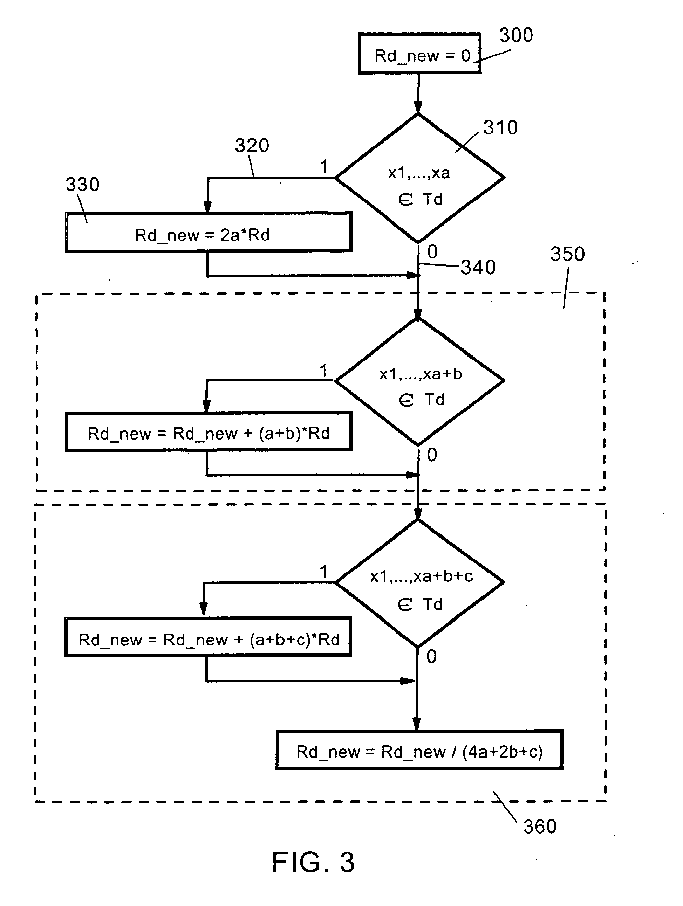

Fig. 3 shows the mechanism that leads to a new ranking value 'Rd_new' for each document 'd' contained in a result list. As already mentioned, the number of iterations per individual document depends on the number of discrete weighting levels that are offered to the user. Following the example depicted in Fig. 2 with three different ratings ('high', 'medium' and 'low') one has to calculate up to three portions per document that make up the new rank value.

For each document it is started with its 'absolute' rank value of the unweighted result list 'Rd' and set 300 the initial value of 'Rd_new' equal to '0'. Further it is checked 310 whether any of the lexical affinities that have been weighted 'high' are contained in the document d. If true 320, the new ranking value 'Rd_new' is set 330 to '2*a*Rd' ('a' is the number of lexical affinities weighted with 'high'), otherwise 'Rd_new' remains unchanged 340.

In a next iteration 350 one performs a similar calculation for all the lexical affinities that have been rated 'high' and 'medium', and finally a third iteration 360 takes into account all the 'high', 'medium' and 'low' rated lexical affinities. The last step is a normalization of the new rank value 'Rd_new'.

It is noted hereby that the above described mechanism for re-ranking documents can be applied to any text documents.

## Claims

1. A method for re-ranking (170) an existing list (120) of text documents, said list being the result of a prior search by a search engine (110) for query terms in a set of documents, wherein in said list each document d has assigned an absolute numeric value Rd as its initial rank Rd, said initial rank Rd being the ranking of the prior search derived from query terms only, and wherein a number of m context terms (130) is extracted (110) from the documents in said list,

   the method being **characterized by** the following steps:

   - receiving weighted context feedback on the context terms from the user, on the basis of said feedback determining (160) a number of a context terms of high relevance (180), a number of b context terms of medium relevance (180), and a.number of c context terms of low relevance (180) such that a+b+c is equal to m;
   - for each document d in said list

      A) assigning (320) a new numeric rank Rd_new, whereby Rd_new is 2*a*Rd if (310) at least one context term of high relevance is contained in the document d, otherwise (300) Rd_new is 0;
      B) incrementing (350) the new rank Rd_new by (a+b)*Rd if at least one context term of high relevance and at least one context term of medium relevance are contained in the document d;
      C) incrementing (360) the new rank Rd_new by (a+b+c)*Rd if at least one context term of high relevance and at least one context term of medium relevance and at least one context term of low relevance are contained in the document d;
      D) dividing (360) the new rank Rd_new by (4*a+2*b+c).

2. The method of claim 1, wherein lexical affinities are used as said extracted context terms.

3. A computer program directly loadable into the internal memory of a digital computer comprising software code portions performing the method according to anyone of the preceding claims 1 to 2 when said program is run on said computer.

4. A computer program product comprising a computer usable medium storing program instructions executable by a computer, said program instructions comprising a computer program according to the preceding claim.

5. A system comprising means implementing the method according to the claims 1 or 2, wherein said search engine provides (130) said extracted context terms.

6. The system according to claim 5, where said list and said extracted context terms are presented to a system user (100), and where said user weights (160) said extracted context terms according to their relevance.

**7.** The system according to claim 6, where the re-ranking steps and the presentation of said list and of said extracted context terms are performed solely by a client data processing system.

## Patentansprüche

**1.** Verfahren zum Herstellen einer neuen Rangordnung (170) einer bestehenden Liste (120) von Textdokumenten, die das Ergebnis einer vorherigen Suche durch eine Suchmaschine (110) nach Abfragebegriffen in einem Satz von Dokumenten ist, wobei in der Liste jedem Dokument d ein absoluter numerischer Wert Rd als sein ursprünglicher Rang Rd zugewiesen ist, wobei der ursprüngliche Rang Rd die nur von Abfragebegriffen abgeleitete Rangordnung der vorherigen Suche ist und wobei eine Anzahl von m Kontextbegriffen (130) aus den Dokumenten in der Liste entnommen (110) wird,
wobei das Verfahren durch die folgenden Schritte **gekennzeichnet** ist:

- Empfangen gewichteter Kontextrückmeldung über die Kontextbegriffe vom Benutzer, auf der Grundlage der Rückmeldung Ermitteln (160) einer Anzahl von a Kontextbegriffen hoher Relevanz (180), einer Anzahl von b Kontextbegriffen mittlerer Relevanz (180) und einer Anzahl von c Kontextbegriffen geringer Relevanz (180), so dass a+b+c gleich m ist;
- für jedes Dokument d in der Liste

A) Zuweisen (320) eines neuen numerischen Rangs Rd_neu, wobei Rd_neu 2*a*Rd ist, wenn (310) mindestens ein Kontextbegriff hoher Relevanz im Dokument d enthalten ist, andernfalls (300) ist Rd_neu 0;
B) Erhöhen (350) des neuen Rangs Rd_neu um (a+b)*Rd, wenn mindestens ein Kontextbegriff hoher Relevanz und mindestens ein Kontextbegriff mittlerer Relevanz im Dokument d enthalten sind;
C) Erhöhen (360) des neuen Rangs Rd_neu um (a+b+c)*Rd, wenn mindestens ein Kontextbegriff hoher Relevanz und mindestens ein Kontextbegriff mittlerer Relevanz und mindestens ein Kontextbegriff geringer Relevanz im Dokument d enthalten sind;
D) Teilen (360) des neuen Rangs Rd_neu durch (4*a+2*b+c) .

**2.** Verfahren nach Anspruch 1, wobei lexikalische Affinitäten als die entnommenen Kontextbegriffe verwendet werden.

**3.** Computerprogramm, das direkt in den internen Speicher eines Digitalcomputers ladbar ist und das Softwarecodeabschnitte umfasst, die das Verfahren nach einem der vorangehenden Ansprüche 1 bis 2 durchführen, wenn das Programm auf dem Computer ausgeführt wird.

**4.** Computerprogrammprodukt, welches ein computertaugliches Medium umfasst, das durch einen Computer ausführbare Programmanweisungen speichert, wobei die Programmanweisungen ein Computerprogramm nach dem vorangehenden Anspruch umfassen.

**5.** System, das Mittel umfasst, die das Verfahren nach Anspruch 1 oder 2 umsetzen, wobei die Suchmaschine die entnommenen Kontextbegriffe bereitstellt (130).

**6.** System nach Anspruch 5, bei dem die Liste und die entnommenen Kontextbegriffe einem Systembenutzer (100) präsentiert werden und bei dem der Benutzer die entnommenen Kontextbegriffe nach ihrer Relevanz gewichtet (160).

**7.** System nach Anspruch 6, bei dem die Schritte zum Herstellen einer neuen Rangordnung und die Präsentation der Liste und der entnommenen Kontextbegriffe allein durch ein Client-Datenverarbeitungssystem durchgeführt werden.

## Revendications

**1.** Procédé pour reclasser (170) une liste (120) existante de documents en textes, ladite liste étant le résultat d'une recherche antérieure par un moteur de recherche (1110), pour des termes de consultation dans un jeu de documents, dans lequel, dans ladite liste, chaque document d se voit affecter une valeur numérique absolue Rd en tant que son classement initial Rd, ledit classement initial Rd étant le classement de la recherche antérieure, dérivé à partir de termes de consultation uniquement, et dans lequel une pluralité de m termes de contexte (130) est extraite (110)

<center>**10**</center>

des documents dans ladite liste,

le procédé étant **caractérisé par** les étapes suivantes :

- réception d'une information de retour à contexte pondéré, sur les termes de contexte provenant de l'utilisateur, d'après ladite information de retour, détermination (160) d'une pluralité de a termes de contexte de haute pertinence (180), d'une pluralité de b termes de contexte de moyenne pertinence (180), et d'une pluralité de c termes de contexte de faible pertinence (180), telle que a+b+c soit égal à m ;

- pour chaque document dans ladite liste :

A) affectation (320) d'un nouveau classement numérique Rd_new, de manière que Rd_new soit 2*a*Rd si (310) au moins un terme de contact de haute pertinence soit contenu dans le document d, autrement (300) Rd_new est 0 ;

B) incrémentation (350) du nouveau classement Rd_new de (a+b)*Rd, si au moins un terme de contexte de haute pertinence et au moins un terme de contexte de moyenne pertinence sont contenus dans le document d ;

C) incrémentation (360) du nouveau classement Rd_new de (a+b+c)*Rd, si au moins un terme de contexte de haute pertinence et au moins un terme de contexte de moyenne pertinence et au moins un terme de contexte de faible pertinence sont contenus dans le document d ;

D) division (360) du nouveau classement Rd_new par (4*a+2*b+c).

2. Procédé selon la revendication 1, dans lequel des affinités lexicales sont utilisées, en tant que dits termes de contexte extraits.

3. Programme informatique, directement chargeable dans la mémoire interne d'un ordinateur numérique, comprenant des parties de code logiciel mettant en oeuvre le procédé selon l'une quelconque des revendications 1 à 2 précédentes, lorsque ledit programme fonctionne sur ledit ordinateur.

4. Produit de programme informatique comprenant un support utilisable par un ordinateur, stockant des instructions de programme exécutables par un ordinateur, lesdites instructions de programme comprenant un programme informatique selon la revendication précédente.

5. Système, comprenant des moyens, mettant en oeuvre le procédé selon les revendications 1 ou 2, dans lequel ledit moteur de recherche fournit (130) lesdits termes de contexte extraits.

6. Système selon la revendication 5, dans lequel ladite liste et lesdits termes de contexte extraits sont présentés à un utilisateur système (100), et dans lequel ledit utilisateur pondère (160) lesdits termes de contexte extraits, selon leur pertinence.

7. Système selon la revendication 6, dans lequel les étapes de reclassement, et la présentation de ladite liste et desdits termes de contexte extraits, sont accomplies uniquement par un système de traitement de données client.

FIG. 1

FIG. 2

FIG. 3

**EP 1 170 677 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Incorporating user preferences in multimedia queries. **R. FAGIN ; E. L. WIMMERS.** Proc. 1997 International Conference on Database Theory. 247-261

- **R. FAGIN ; Y. S. MAAREK.** Allowing users to weight search terms. *Proc. of RIAO,* 2000, 682-700